# EUROPEAN PATENT APPLICATION

(11) **EP 3 168 498 A1**
(43) Date of publication of application: **17.05.2017**
(21) Application number: 15425095.5
(22) Date of filing: 12.11.2015
(51) Int. Cl.: F16H 47/04

(54) **HYDROMECHANICAL POWER SPLIT TRANSMISSION ASSEMBLY**

(71) Applicant: Dana Rexroth Transmission Systems S.r.l., 38062 Arco (Trento) (IT)
(72) Inventor: Mutschler, Steffe, 89233 Burlafingen (DE); Möller, Dennis, 71332 Waiblingen (DE)
(74) Representative: Bonatto, Marco

(57) **Abstract**

Hydromechanical power split transmission assembly (1, 1', 1") comprising a first power branch which is a mechanical transmission branch; a second power branch comprising an infinitely adjustable transmission unit (5); an epicyclic reduction gear (7). The epicyclic reduction gear (7) comprises a gear ring assembly (35), a sun gear (37), one or more satellite gears (39) and a carrier assembly (41, 41'). The input shaft (3) drives the gear ring assembly (35). The first and the second power branches are arranged for reversibly varying the ratio (τ_{G} [tau-G]) between the rotational speeds of the output (19) and the input shafts (3). Transmission concept for mobile machines (e.g. Wheel loader, Telehandler, Backhoe loader) with both high efficiency and high maximum drive speed with as low complexity as possible. Main drivers gain a high efficiency for fuel consumption benefit under delivering high vehicle performance and low manufacturing cost at the same time.

## Description

### Field of the invention

The present invention relates to a hydromechanical variable transmission having a continuous variable transmission ratio.

### Background art

Hydromechanical variable transmissions having a continuous transmission ratio are currently known and often called *"power split transmission"* in the technical jargon. Examples of such transmissions are disclosed for instance in the publication DE102009031382A1.
This kind of transmissions was originally conceived and developed for relatively heavy sized vehicles such as wheel loaders, material handling, graders, skidders and could be adapted for sweepers and municipal vehicles as well compact vehicles.
The authors of the present invention noted that it would be desirable and useful to have hydromechanical variable transmissions suitable for being manufactured in a smaller size and at cheaper costs.

The present invention is therefore directed to overcoming one or more problems of the prior art set forth above, and in particular to provide a hydromechanical power split transmission having a simpler mechanical constructions suitable for being manufactured at lower costs, and more suitable for being assembled on vehicles of small or medium size.

### Summary of the invention

In a first aspect, the present invention is directed to a hydromechanical variable transmission assembly having the features according to claim 1.
In a second aspect, the present invention is directed to a vehicle having the features according to claim 15.

In a particular embodiment of the invention, at least two downstream gear wheels (9, 11, 15, 17) are assembled on the at least one downstream shaft (21, 23), and the at least one synchronizer and/or dog clutch (25, 27) is arranged for causing the at least two downstream gear wheels (9, 11, 15, 17) rotate either integral with said at least one downstream shaft (21, 23) or idle relative to said at least one downstream shaft (21, 23) so as to select different drive ranges within which the ratio (τ_{G} [tau-G]) between the rotational speeds of the output shaft (19) and the input shafts (3) can vary.

The advantages achievable through the present invention will be more apparent, to the person skilled in the field, from the following detailed description of some particular and non limiting embodiments, provided with reference to the following schematic figures.

### List of Figures

Figure 1 shows a mechanical scheme of a hydromechanical variable transmission according to a first embodiment of the invention;
Figure 2 shows a mechanical scheme of a hydromechanical variable transmission according to a second embodiment of the invention;
Figure 3 shows shows a mechanical scheme of a hydromechanical variable transmission according to a third embodiment of the invention.

### Detailed description

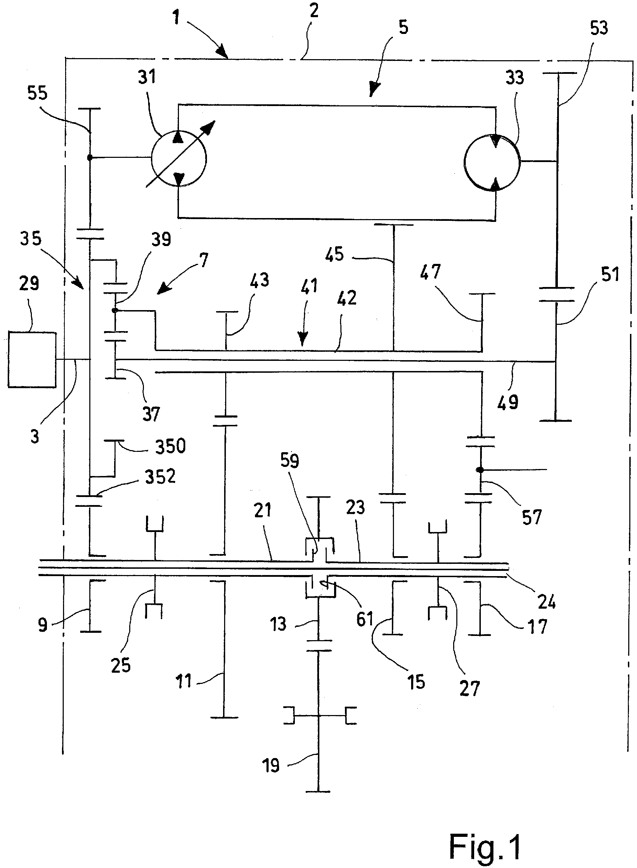

Figure 1 relates to a hydromechanical variable transmission assembly, referred to with the overall reference 1, according to a first embodiment of the invention. The transmission 1, as well as the transmissions 1' and 1" described later, can be assembled for example in vehicles such as wheel loaders, backhoe loaders, telescopic handlers, material handlers, tractors, self-propelled agricultural machines, the so-called municipal vehicles, that are public services multipurpose vehicles used by municipalities as well as the sweepers vehicles.

The hydromechanical variable transmission 1 comprises:
- an input shaft 3;
- a first power branch which is a mechanical transmission branch;
- a second power branch comprising an infinitely adjustable transmission unit 5;
- an epicyclic reduction gear 7 driven by the first and by the second power branch;
- a plurality of downstream gear wheels 9, 11, 15, 17 driven by the first and possibly also by the second power branch;
- an output shaft 19 driven by the gear wheel 13 which in its turn is driven by the first and possibly also by the second power branch;
- at least one downstream shaft 21, 23 on which at least one, and possibly at least two downstream gear wheels of said plurality are mounted coaxial to the respective shaft 21, 23;
- eventually a plurality of synchronizers 25, 27, each of which arranged for causing a respective downstream gear wheel 9, 11, 15, 17 rotate either integral with said at least one downstream shaft 21, 23 or idle relative to said at least one downstream shaft 21, 23 so as to select different drive ranges within which the ratio τ_{G} [tau-G] between the rotational speeds of the output 19 and the input shaft 3 can vary. The ratio τ_{G} [tau-G] in the present description is referred to as the overall transmission ratio of the whole transmission assembly 1.

The hydromechanical variable transmission 1 further comprises a gear box 2 containing the first and the second power branch, the epicyclic reduction gear 7, the plurality of downstream gear wheels 9, 11, 15, 17, 57 and part of the input shaft 3. The gear box 2 can have any shape, for example roughly parallelepipedal, cylindrical or a more complex shape.

The input shaft 3 can be driven by a suitable internal combustion or electric motor, referred to in the present description as "primary engine" or "primary motor" 29, which is preferably a major source of mechanical power of the vehicle on which the transmission 1 is mounted, and for example can be suitable for allowing the vehicle to travel over a ground or floor. Preferably the primary engine or motor 29 drives the input shaft 3 directly, for example because rotates integral with it or because it does not drive the input shaft 3 through intermediate gears, chains or cams.

The primary engine or motor 29 can comprise an outer box separate from the gear box 2 of the transmission assembly 1.
In the transmission 1 the infinitely adjustable transmission unit 5 of the second power branch comprises a hydraulic pump 31 and a hydraulic motor 33 working with pressurized oil or another hydraulic liquid. The hydraulic pump, 31 and/or the hydraulic motor 33 can continuously adjust their displacement so as to infinitely -or continuously- adjust the transmission ratio of the assembly pump 31 + motor 33.

The output shaft 19 can comprise a gear wheel.
The downstream shafts 21, 23 are preferably hollow or tubular shafts. Preferably they are also coaxial one to another. They can be fitted over an inner idle shaft 24.

Two or more downstream gear wheels 9, 11 and a synchronizer 25 are coaxially assembled on the downstream shaft 21. Two or more downstream gear wheels 15, 17 and a synchronizer 27 are coaxially assembled on the downstream shaft 23.

When they are disengaged from their respective synchronizers 25, 27 the downstream gear wheels 9, 11, 15, 17 can rotate idle relative to their respective downstream shafts 21, 23; when they engage their respective synchronizers 25, 27 the downstream gear wheels 9, 11, 15, 17 rotate integral with their respective downstream shafts 21, 23. Each synchronizer 25, 27 can displace axially along the respective shaft 21, 23 and can engage a gear wheel 9, 11, 15, 17 for example through a suitable sleeve collar.

The epicyclic reduction gear 7 comprises the ring gear assembly 35, the sun gear 37, one or more satellite gear 39 and the carrier assembly 41. The satellite gear or gears 39 are assembled on the carrier assembly 41, namely at an end thereof. The sun gear 37 engages the one or more satellite gear 39 which in their turn engage the ring gear assembly 35, more particularly its first inner gear 350. A plurality of gear wheels 43, 45, 47 is driven by, and possibly integral with, the carrier assembly 41. More particularly a part of the carrier assembly can form a hollow -or tubular- shaft 42 and the gear wheels 43, 45, 47 can be assembled coaxial and for example integral with said hollow -or tubular- shaft of the carrier 41.
The gear wheels 43, 45, 47 can engage with the downstream gear wheels 11, 15, and 17 respectively.

A shaft 49 can extend in, coaxially and along the hollow shaft 42. The shaft 49, for example at one of its ends, drives the sun gear 37, and at another end drives the gear wheel 51. The wheel 51 is driven by the hydraulic motor 33 for example through a gear wheel 53 engaging the gear 51.
The primary engine or primary motor 29 can drive the hydraulic pump 31 through the ring gear assembly 35 and another gear wheel 55 engaging the ring gear assembly 35. More precisely the ring gear assembly 35 can form a first inner gear 350 engaging the satellite gear(s) 39, and a second outer gear 352 engaging the gear wheel 55.
Advantageously the ring gear assembly 35 drives also one of the downstream gear wheel 9 by engaging it through the second outer gear 352.

The transmission assembly 1 can further comprise a reverse drive wheel 57 engaging the gears 47 and the downstream gear 17 so as to reverse the direction of the rotation of the output shaft 19. The reverse drive wheel can be for example a reverse idler gear 57.

Preferably the transmission assembly 1 further comprises two clutches 59, 61 allowing to reversibly engage the output shaft 19 with the first 21 and the second downstream shaft 23 respectively. More precisely the clutches 59, 61 can reversibly cause the gear wheel 13 engage the first 21 and the second downstream shaft 23 respectively.
The embodiment of transmission assembly 1 of Figure 1 is designed for providing three forward drive ranges and one backward drive range of the output shaft 19.

For operating in the first forward drive range, corresponding to the lowest rotational speeds, the highest torques of the output shaft 19 and to the lower transmission ratios τ_{G} [tau-G] of the overall assembly 1, the first synchronizer 25 engages the gear wheel 11 with the first downstream shaft 21 and the gear wheel 9 rotate idle relative to the shaft 21; the latter further engages the gear wheel 43; the first clutch 59 causes the gear wheel 13 engage the first downstream shaft 21; the second clutch 61 leaves the gear wheel 13 disengaged from the second downstream shaft 23; the second synchronizer 27 can engages one or none of the wheels 15, 17 with the second downstream shaft 23.
When shifting from the first to the second drive range, in order not to interrupt the tractive effort, the clutch 59 is gradually opened while the clutch 61 gradually closed up to full engagement.

For operating in the second forward drive range, corresponding to intermediate rotation speeds, intermediate torques of the output shaft 19 and to intermediate transmission ratios τ_{G} [tau-G] of the overall assembly 1, the first clutch 59 leaves the gear wheel 13 disengaged from the first downstream shaft 21; the first synchronizer 25 can engage one or none of the wheels 9, 11 with the first downstream shaft 21; the second synchronizer 27 engages the gear wheel 15 with the second downstream shaft 23; the latter further engages the gear wheel 45; the second clutch 61 allows the gear wheel 13 to engage the second downstream shaft 23.

For operating in the backward driving, the first clutch 59 leaves the gear wheel 13 disengaged from the first downstream shaft 21; the first synchronizer 25 can engage one or none of the wheels 9, 11 with the first downstream shaft 21; the second synchronizer 27 engages the gear wheel 17 with the second downstream shaft 23 and the wheel 15 rotate idle relative to the shaft 23; the latter further engages the gear wheel 57; the second clutch 61 allows the gear wheel 17 to engage the second downstream shaft 23.

For operating in the third forward drive range, corresponding to the highest rotational speeds, the lowest torques of the output shaft 19 and to the highest transmission ratios τ_{G} [tau-G] of the overall assembly 1, the first synchronizer 25 engages the gear wheel 9 with the first downstream shaft 21 and the gear wheel 11 rotate idle relative to the shaft 21; the gear wheel 9 engages also the ring gear assembly 35, namely its outer gear 352; the first clutch 59 allows the gear wheel 13 to engage the first downstream shaft 21; the second clutch 61 leaves the gear wheel 13 disengaged from the second downstream shaft 23; the second synchronizer 27 can engage one or none of the wheels 15, 17 with the second downstream shaft 23. The third forward drive range is most suited for example for longer driving distances.

Advantageously in the third forward drive range -or more generally, in the drive range corresponding to the direct drive (and purely mechanical) mode- the hydraulic variator 5 is set to zero displacement or zero torque of the motor 33 and/or the pump 31, for example properly adjusting their swivel angle.

Within the first and second forward drive range, and in the backward driving mode, the transmission ratio τ_{G} [tau-G] of the overall assembly 1 can be adjusted by infinitely -or continuously- varying the displacement, that is proportional to the flow rate of the pump 31 and/or of the hydraulic motor 33; this can be done for example by adjusting the swivel angle of the pump 31 or of the motor 33.

In the third forward drive range the transmission assembly works as a direct drive- and purely mechanical transmission transmitting the mechanical power of the primary engine or motor to the output shaft or shafts 19 of the transmission, the overall transmission ratio τ_{G} [tau-G] of the assembly 1 cannot be infinitely adjusted but the bypass of the hydraulic unit 5, for example by setting the swivel angle of the pump at a suitable value, allows a much higher mechanical efficiency than in the first and second forward drive range, and in the backward driving mode.

In the first and second drive ranges and, more generally, in the drive ranges in which the hydraulic unit 5 has to adjust the overall transmission ratio τ_{G} [tau-G] of the transmission unit 1, for increasing the rotational speed of the output shaft 19, the swivel angle of the pump 31 and/or of the motor 33 can be progressively increased, for example so as to keep the rotational speed of the primary engine or primary motor 29 as much constant as possible, allowing the primary engine or motor 29 to operate in the best efficiency conditions.

In the third drive range, or more generally in the direct drive mode, the overall transmission ratio τ_{G} [tau-G] of the transmission unit 1 is constant, the swivel angle of the pump 31 and/or of the motor 33 can be set at a constant value, for example at a zero value corresponding to a null rotational output speed or null output torque; for increasing the rotational speed of the output shaft 19 the rotational speed of the primary engine or motor 29 need to be increased.

When downshifting from the third to the second drive range, or from the second to the first drive range, the swivel angle of the pump 31 and/or of the motor 33, or more generally the rotational speed of the pump 31 and/or of the motor 33, is preferably brought at its maximum value, or however increased so as to keep the rotational speed of the primary engine or primary motor 29 as much constant as possible.

For example, each of the synchronizers 25, 27 is arranged for causing only one at a time of the downstream gear wheels 9, 11 or 15, 17 respectively rotate either integral with the respective downstream shafts 21, 23 or idle relative to the respective downstream shafts 21, 23, avoiding the simultaneous rotation of two or more downstream gear wheels 9, 11 or 15, 17 integrally with the respective mentioned shafts.

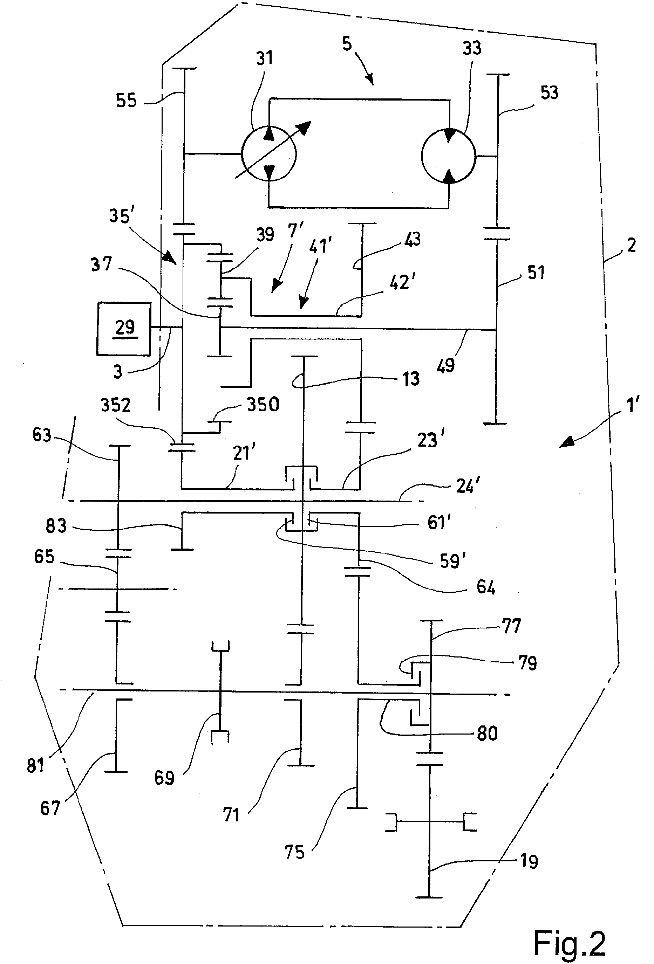

Figure 2 relates to a hydromechanical variable transmission assembly, referred to with the overall reference 1', according to a second embodiment of the invention. The transmission 1' is a variant of the transmission assembly 1 and is arranged for operating in at least one reverse direct drive mode. To this purpose, the transmission assembly 1' is provided with a secondary downstream shaft assembly, substantially parallel but not coaxial to the first downstream shafts 21', 23', 24'. The secondary downstream shaft assembly comprises for example a secondary downstream shaft 81, the gear wheels 67, 71, 75, 77, the synchronizer 69 and the clutch 79, all of them coaxially set on the shaft 81. The clutch 79 is preferably a wet discs clutch.

The transmission assembly 1' further comprises:
- a primary downstream shaft assembly comprising for example the downstream shafts 21', 23', the shaft 24' and the downstream gear wheels 63, 83 and 64, and the clutches 59', 61';
- a speed inverting system comprising for example the reverse idler gear 65. Preferably the gear wheel 63 is mounted on and integral with the shaft 24'.
The gear wheel 83 can be integral with the shaft 21'. The gear wheel 64 can be integral with the shaft 23'.

The shaft 24' is preferably partly contained in the downstream shafts 21', 23', which are preferably tubular.
The reverse idler gear wheel 65 engages with the gear wheels 63, 67 and is driven by the wheel 63.
For example clutches 59', 61' allows the gear wheel 13 to be engaged with the shafts 21', 23' respectively.

The synchronizer 69 allows the gear wheels 67, 71 respectively to be either engaged or disengaged with the shaft 81.
The clutch 79 allows the gear wheel 77 to be engaged with the gear wheel 75 rigidly connected with the tubular shaft 80.

When the clutch 59' is engaged and the synchronizer 69 makes the gear 71 integral with the shaft 81, the gear ring assembly 35 drives the output shaft 19 through the gears wheels 83, 13 and 71, the hydraulic transmission unit 5 is bypassed from transmitting power and the transmission assembly 1' operates in the direct forward drive, preferably providing the greatest ratio τ_{Gf} [tau-Gf] between the forward rotational speed of the output 19 and the rotational speed of the input shafts 3.

When the clutch 59' is engaged and the synchronizer 69 makes the gear 67 integral with the shaft 81, the gear ring assembly 35 drives the output shaft 19 through the gears wheels 13, 63, 65, 67 and the shafts 24', 81. The hydraulic transmission unit 5 is bypasse from transmitting power and the transmission assembly 1' operates in the direct reverse drive, preferably providing the greatest ratio τ_{GR} [tau-GR] between the reverse rotational speed of the output shaft 19 and the rotational speed of the input shafts 3.

In the direct drive modes the flow rate of the pump 31 is preferably set to zero.
When the hydraulic transmission unit 5 has to continuously vary the ratio τ_{Gf} [tau-Gf] in the forward driving mode and transmits a relevant amount of power, in the lowest forward speed the clutches 79 is engaged and the output shaft 19 is driven by the gears wheels 43, 64, 75, 77; in the middle forward speed the synchronizer 69 makes the wheel 71 integral with the shaft 81, the clutch 61' is closed, the clutch 79 is open and the output shaft 19 is driven by the gears 43, 64, 13, 71 and 77.

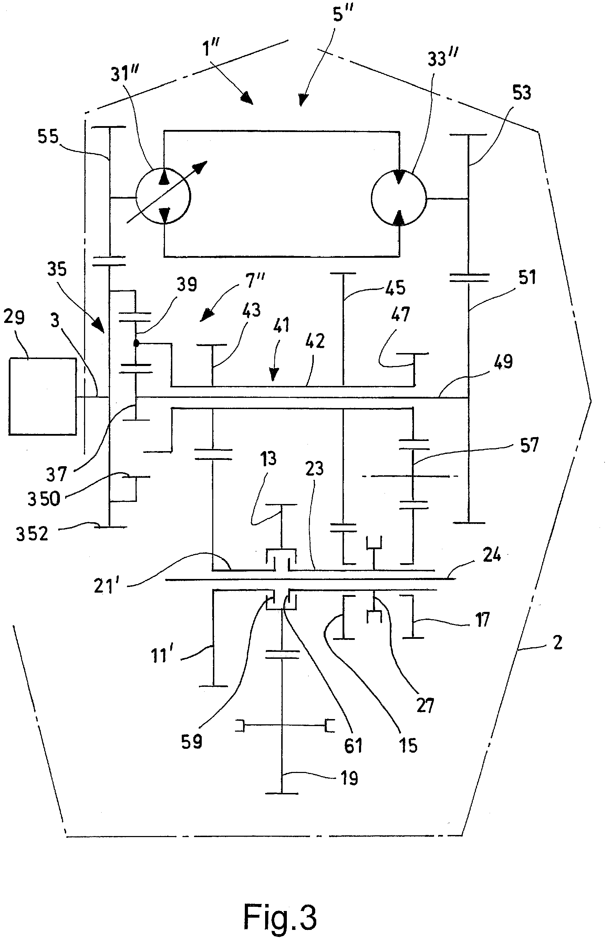

Figure 3 shows a third embodiment of a hydromechanical variable transmission assembly according to the invention, referred to with the overall reference 1".
The transmission 1" differs from the transmission 1 of Figure 1 in that:
- the synchronizer 25 and the downstream gear wheel 9 are absent, therefore the transmission 1" is not able to provide a direct drive mode in which the mechanical power is transmitted only through a mechanical transmission without contribution of the hydraulic unit 5;
- the transmission 1" provides one drive range less than the transmission 1.

The transmission 1" can comprise a first 21' and a second downstream shaft 23, and one or more downstream gear wheels 11', 13, 17, 61. The gear wheel 11' or other downstream wheels can be integral with the downstream shaft 21' or more generally with their respective downstream shafts.
Some advantages of the transmission assembly 1" in comparison to the transmission 1 are that two less synchronizers are necessary, with a relevant cost impact and less complex control; the transmission 1" provides only two drive ranges and a higher speed in reverse mode -that is, backward mode- with one range; only one hollow shaft is requires, entailing a less complex and less expensive design; the overall electro-mechanical construction of the transmission 1" is less complex and easier to be controlled.

Advantageously the transmission assembly 1" is designed to provide only two forward drive ranges and advantageously only one backward drive range. This contributes to simplify the electro-mechanical construction of the actuators and of the control of the transmission 1", but still achieving quite a high efficiency.
On the contrary, some advantages of the transmission assembly 1 of Figure 1 with respect of the transmission assembly 1" of Figure 3 are:
- a smaller and cheaper hydrostatic pump 31 and motor 33 are required;
- the transmission 1 is able to provide a direct drive operation mode, the transmission 1" is not.

The hydromechanical variable transmission assemblies 1, 1', 1" previously described are continuously variable transmissions having a relatively simple and cheap mechanical construction, can provide a high efficiency in all drive ranges, are well suited for being manufactured at relatively low costs and can be controlled in a relatively simple way; the direct drive modes provided by the transmissions 1 and 1' allow a particularly high efficiency, and consequently a low fuel consumption, at the higher speeds especially suited for travelling. All shifting between different drive ranges can be done without interruptions of the tractive effort. The clutches 59, 61, 59', 61', 79 are preferably wet disc clutches.

The embodiments previously described can undergo several changes and variations yet without departing from the scope of the present invention. For example a transmission assembly according to the invention can provide not only three but also two or more than three forward and/or backward drive ranges. A transmission assembly according to the invention can be provided also with three or more synchronizers, each of which is for example arranged for causing a downstream gear wheel rotate either integral with a downstream shaft or idle relative to said downstream shaft. Furthermore all details are replaceable with technically equivalent elements. The examples and lists of the possible variations of the present application are to be intended as non exhaustive.

## Claims

1. Hydromechanical power split transmission assembly (1, 1', 1") comprising:
- an input shaft (3);
- a first power branch which is a mechanical transmission branch;
- a second power branch comprising an infinitely adjustable transmission unit (5);
- an epicyclic reduction gear (7) driven by the first and possibly also by the second power branch;
- a plurality of downstream gear wheels (9, 11, 13, 15, 17; 67, 71,75, 77; 11) driven by the first and possibly also by the second power branch;
- an output shaft (19) driven by one or more of the downstream gear wheels (13, 77);
- a box (2) containing the first and the second power branch, the epicyclic reduction gear (7), the plurality of downstream gear wheels (9, 11, 13, 15, 17, 57) and part of the input shaft (3);
wherein:
- the epicyclic reduction gear (7) comprises a gear ring assembly (35), a sun gear (37), one or more satellite gears (39) and a carrier assembly (41, 41');
- the input shaft (3) drives the gear ring assembly (35).
- the first and the second power branches are arranged for reversibly varying the ratio (τ_{G} [tau-G]) between the rotational speeds of the output (19) and the input shafts (3).

2. Transmission assembly (1, 1') according to claim 1, wherein the input shaft (3) can drive the output shaft (19) through a purely mechanical transmission comprising one or more gear wheels but non comprising hydraulic or other fluidic components.

3. Transmission assembly (1',) according to claim 2, comprising a speed inverting system (65) arranged for reversibly invert the rotation direction of the output shaft (19) when the input shaft (3) drives the output shaft (19) through a purely mechanical transmission comprising one or more gear wheels but non comprising hydraulic or other fluidic components.

4. Transmission assembly (1, 1', 1") according to claim 1, comprising an electric or electronic control system programmed or however arranged for controlling the operation of the transmission assembly (1, 1', 1") depending on one or more of the following entities: the rotation speed of the input shaft (3) and/or of the output shaft (19), the driving torque applied by the input shaft (3) to the rest of the transmission assembly (1, 1', 1"), the load torque applied to the output shaft (19) by the rest of the transmission assembly (1, 1', 1 ").

5. Transmission assembly (1, 1', 1") according to claim 1, wherein the infinitely adjustable transmission unit (5) comprises a hydraulic pump (31) and a hydraulic motor (33), the hydraulic pump (31) drives the hydraulic motor (33), and either the hydraulic pump (31) and/or hydraulic motor (33) are suitable for varying their flow rate or displacement so as to vary the transmission ratio of the assembly comprising the pump (31) and the motor (33).

6. Transmission assembly (1, 1', 1") according to claim 5, wherein the gear ring assembly (35) drives the hydraulic pump (31).

7. Transmission assembly (1, 1', 1") according to claim 5, wherein the hydraulic motor (33) drives the epicyclic reduction gear (7), for example its sun gear (37).

8. Transmission assembly (1, 1', 1") according to claim 6, wherein the carrier assembly (41, 41') is arranged for driving one or more downstream gear wheels (11, 13, 15, 17; 71, 75, 77; 11').

9. Transmission assembly (1, 1', 1") according to claim 6, wherein the gear ring assembly (35) is arranged for driving at least one of the downstream gear wheels (9; 83).

10. Transmission assembly (1, 1', 1") according to claim 1, comprising at least two downstream shafts (21, 23; 21', 23'; 81), wherein at least one, and for example at least two downstream gear wheels (9, 11, 13, 15, 17; 64, 83; 11') is/are assembled on each downstream shaft (21, 23; 21', 23'; 81).

11. Transmission assembly (1, 1', 1") according to claim 1, comprising one or more clutches (59, 61; 59', 61', 79) arranged for causing the at least one downstream shaft (21, 23; 21', 23'; 81) to drive the output shaft (19), depending on whether the one or more clutches engage or disengage the respective downstream shaft (21, 23; 21', 23'; 81).

12. Transmission assembly (1, 1', 1") according to claim 1, further comprising:
- at least one downstream shaft (21, 23; 21', 23'; 81) on which at least one downstream gear wheel (9, 11, 13, 15, 17) of said plurality is assembled;
- at least one synchronizer (25, 27; 69) arranged for causing a respective downstream gear wheel (9, 11, 15, 17; 67, 71) rotate reversibly integral with said at least one downstream shaft (21, 23; 81) or reversibly idle relative to said at least one downstream shaft (21, 23; 81) so as to select different speed ranges within which the ratio (τ_{G} [tau-G]) between the reverse rotational speed of the output (19) and the rotational speed of the input shafts (3) can vary.

13. Transmission assembly (1) according to claim 1, comprising two downstream shafts (21, 23), wherein at least one downstream gear wheel (9, 11;, 15, 17) can be reversibly connected to and disconnected from shaft (21; 23).

14. Transmission assembly (1) according to claim 12, comprising a plurality of synchronizers (25, 27), each of which arranged for causing a respective downstream gear wheel (9, 11, 15, 17) rotate reversibly integral with said at least one downstream shaft (21, 23) or reversibly idle relative to said at least one downstream shaft (21, 23) so as to select different speed ranges within which the ratio (τ_{G} [tau-G]) between the rotational speeds of the output (19) and the input shafts (3) can vary.

15. Vehicle comprising a primary engine or a primary motor (29) and a transmission assembly (1, 1', 1") according to one or more of the preceding claims, wherein the primary engine or motor is arranged for allowing the vehicle to travel over a floor or ground, primary engine or motor drives the input shaft (3) and rotates integral with it.
